# EUROPEAN PATENT APPLICATION

(11) **EP 4 797 426 A1**
(43) Date of publication of application: **26.08.2026**
(21) Application number: 24879482.8
(22) Date of filing: 17.09.2024
(51) Int. Cl.: H01M 50/536, H01G 11/72, H01G 11/84, H01M 4/66, H01M 10/04, H01M 50/533

(54) **METHOD FOR MANUFACTURING POWER STORAGE DEVICE, AND POWER STORAGE DEVICE**

(30) Priority: 16.10.2023 JP 2023178175
(71) Applicant: Panasonic Intellectual Property Management Co., Ltd., Kadoma-shi, Osaka 571-0057 (JP)
(72) Inventor: HIROSE Takayuki, Kadoma-shi, Osaka 571-0057 (JP)
(74) Representative: Novagraaf International SA
(86) International application number: PCT/JP2024/033136
(87) International publication number: WO 2025/084055

(57) **Abstract**

This method for manufacturing a power storage device 1 includes: preparing an electrode group having a current collector 12 partially laminated with an electrode active material layer; bringing an exposed part 12a of the current collector 12 not covered by the electrode active material layer into contact with a first surface 21a of a current collector plate; and irradiating a second surface 21b of the current collector plate on the opposite side to the first surface 21a with laser light L to bond the exposed part 12a to the first surface 21a. The current collector plate has an inclined surface 60 extending obliquely with respect to an optical axis Ax of the laser light L in at least a part of a laser light L irradiation region 58 of the second surface 21b.

## Description

### TECHNICAL FIELD

The present invention relates to a method of manufacturing a power storage apparatus and to a power storage apparatus.

### BACKGROUND ART

In the related art, a power storage apparatus with an electrode group housed in an external can is known. In such a storage apparatus, the current collector exposed at the end of the electrode group and the current collector plate are laser welded (see, for example, patent literature 1).

### RELATED-ART LITERATURE

### PATENT LITERATURE

[Patent literature 1] JP2008-166030

### SUMMARY OF INVENTION

### TECHNICAL PROBLEM

When the current collector plate is irradiated with a laser beam, a portion of the laser beam can be reflected by the current collector plate. When the reflected laser beam returns to the laser apparatus, the optical fiber, etc. of the laser apparatus may be damaged.

The present disclosure addresses the issue described above, and a purpose thereof is to provide a technology designed to reduce the light returning to the laser apparatus in laser welding between the current collector and the current collector plate.

### SOLUTION TO PROBLEM

An embodiment of the present disclosure relates to a method of manufacturing a power storage apparatus. The method of manufacturing includes: preparing an electrode group including a current collector in which an electrode active material layer is stacked on a part of the current collector; and bringing an exposed portion of the current collector that is not coated with the electrode active material layer into contact with a first surface of the current collector plate and irradiating a second surface of the current collector plate opposite to the first surface with a laser beam to join the exposed portion to the first surface. The current collector plate has an inclined surface extending diagonally with respect to an optical axis of the laser beam at least in a part of a region in the second surface irradiated with the laser beam.

Another embodiment of the present disclosure relates to a power storage apparatus. A power storage apparatus includes: an electrode group including a current collector in which an electrode active material layer is stacked on a part of the current collector; and a current collector plate having a first surface to which is joined an exposed portion of the current collector not coated with the active electrode material layer. The current collector plate has a region irradiated with a laser beam on a second surface opposite to the first surface and has an inclined surface extending diagonally with respect to an optical axis of the laser beam at least in a part of the region.

Optional combinations of the aforementioned constituting elements, and implementations of the present disclosure in the form of methods, apparatuses, and systems may also be practiced as additional modes of the present disclosure.

### ADVANTAGEOUS EFFECTS OF INVENTION

According to the present disclosure, it is possible to reduce the light returning to the laser apparatus in laser welding between the current collector and the current collector plate.

### BRIEF DESCRIPTION OF DRAWINGS

[Fig. 1] Fig. 1 is a cross-sectional view of a power storage apparatus according to the embodiment.
[Fig. 2] Fig. 2A is an exploded perspective view of an electrode group.
Fig. 2B is a plan view of the electrode group to which a first current collector plate is joined.
[Fig. 3] Figs. 3A, 3B, and 3C show the steps of joining the current collector and the current collector plate.
[Fig. 4] Fig. 4 is a cross-sectional view of the current collector plate according to the variation.

### DESCRIPTION OF EMBODIMENTS

Hereinafter, the present disclosure will be described based on a preferred embodiment with reference to the accompanying drawings. The embodiment is not intended to limit the scope of the present disclosure but exemplify the present disclosure. Not all of the features and the combinations thereof described in the embodiment are necessarily essential to the present disclosure. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification and claims do not indicate an order or importance by any means unless specified otherwise and are used to distinguish a certain feature from the others. Those of the members that are not material to the description of the embodiments are omitted in the drawings.

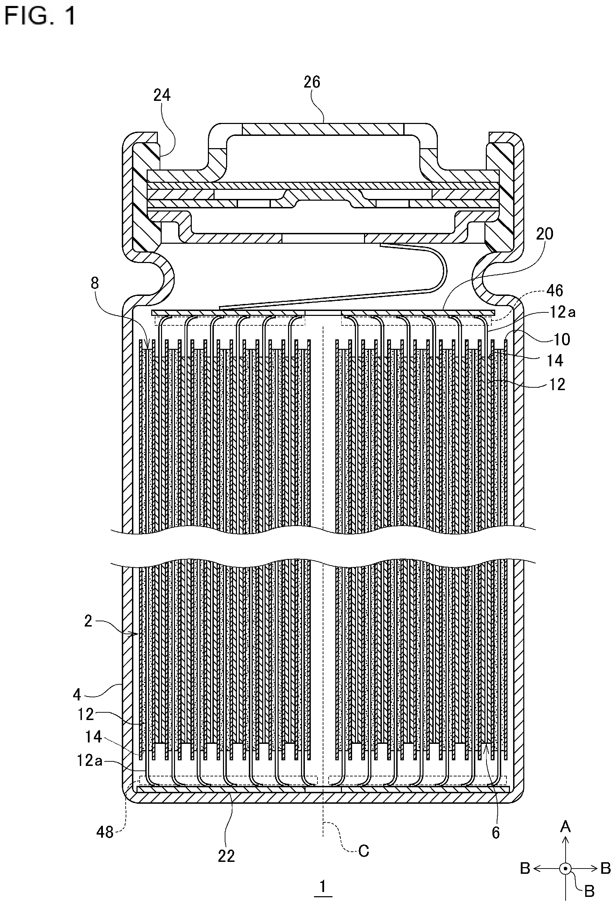

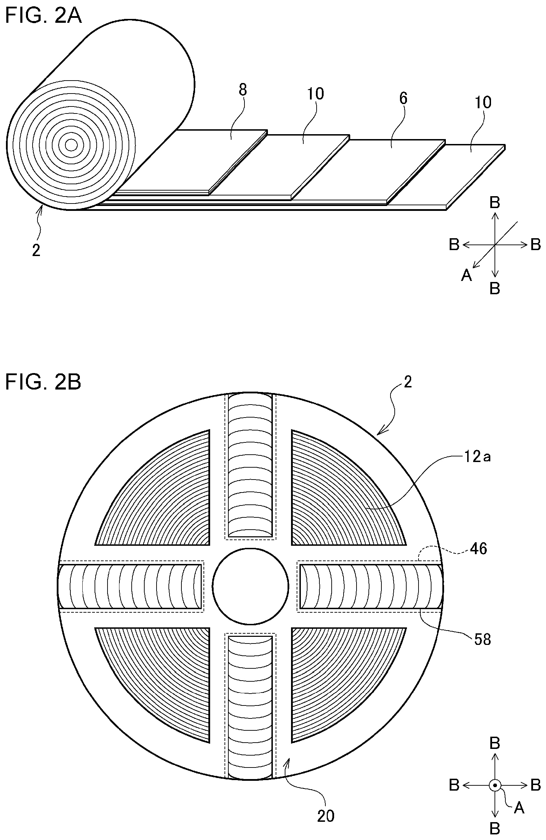

Fig. 1 is a cross-sectional view of a power storage apparatus 1 according to the embodiment. Fig. 2A is an exploded perspective view of an electrode group 2. Fig. 2B is a plan view of the electrode group 2 to which a first current collector plate 20 is joined. In Fig. 1, the illustration of the shape of the first current collector plate 20 and the second current collector plate 22 is simplified, and illustration of an inclined surface 60 is omitted. In Fig. 2A, the illustration of a current collector 12 and an electrode active material layer 14 in distinction from one another is omitted.

The power storage apparatus 1 is a rechargeable secondary battery exemplified by a lithium ion battery, a nickel hydride battery, a nickel-cadmium battery, etc. or a capacitor like an electric double layer capacitor. The power storage apparatus 1 has a structure in which the electrode group 2 is housed in an outer can 4 along with an electrolytic solution (not shown), the first current collector plate 20, and a second current collector plate 22. The electrode group 2 is cylindrical in shape by way of one example and has a winding structure in which a belt-like first electrode plate 6 and a belt-like second electrode plate 8 are stacked, sandwiching a belt-like separator 10, and are wound in a spiral shape. In the embodiment, the first electrode plate 6 is the positive electrode plate and the second electrode plate 8 is the negative electrode plate. The first electrode plate 6 may be the negative electrode plate, and the second electrode plate 8 may be the positive electrode plate. The separator 10 is formed by a microporous film made of, by way of one example, a polypropylene resin or the like.

The first electrode plate 6 and the second electrode plate 8 include the current collector 12 and an electrode active material layer 14 stacked on a part of the current collector 12. In the case of a general lithium ion secondary battery, the current collector 12 is comprised of an aluminum foil or the like in the case of a positive electrode and is comprised of a copper foil or the like in the case of a negative electrode. The electrode active material layer 14 can be formed by applying an electrode mixture material to the surface of the current collector 12 by a known coating apparatus and drying and rolling the material. The electrode mixture material is obtained by kneading materials including an electrode active material, a binder, a conductive material, etc. in a dispersion medium and uniformly dispersing the materials. In the case of a general lithium ion secondary battery, the electrode active material is lithium cobalt oxide, lithium iron phosphate, etc. in the case of a positive electrode and is graphite, etc. in the case of a negative electrode.

The first electrode plate 6 and the second electrode plate 8 have an exposed portion 12a of the current collector 12 at the end of the plate in the width direction A. The width direction A is a direction intersecting the longitudinal direction of the belt. The exposed portion 12a included in the first electrode plate 6 and the exposed portion 12a included in the second electrode plate 8 protrude in mutually opposite directions in the width direction A. The exposed portion 12a is a portion of the current collector 12 that is not coated with the electrode active material layer 14.

As described above, the electrode group 2 has a structure in which the first electrode plate 6 and the second electrode plate 8 are wound. For this reason, the end of the current collector 12 in the width direction A, i.e., a plurality of exposed portions 12a are arranged in the radial direction B of the electrode group 2. In other words, the electrode group 2 has a structure in which the exposed portions 12a are stacked. The electrode group 2 may have a structure in which pieces of the first electrode plate 6 and pieces of the second electrode plate 8 are stacked in a plurality of layers, sandwiching the separator 10.

The electrode group 2 by way of one example has a first joined region 46 and a second joined region 48 in which the plurality of exposed portions 12a arranged in the radial direction B are bent in the radial direction B. The first joined region 46 and the second joined region 48 are at opposite positions in the width direction A. The plurality of exposed portions 12a included in the first joined region 46 are the exposed portions 12a of the current collector 12 provided in the first electrode plate 6. The plurality of exposed portions 12a included in the second joined region 48 are the exposed portions 12a of the current collector 12 provided in the second electrode plate 8.

For example, each exposed portion 12a is bent toward the center of winding C of the electrode group 2, i.e., bent inward in the radial direction B. The center of winding C is, for example, the geometric center of the outline of the electrode group 2 seen in the width direction A. In the electrode group 2 by way of one example, a plurality of first joined regions 46 and a plurality of second joined regions 48 are respectively arranged at predetermined intervals in the circumferential direction of the electrode group 2. In the embodiment, four first joined regions 46 are arranged at intervals of 90° in the circumferential direction. Further, four second joined regions 48 are arranged at intervals of 90° in the circumferential direction.

The first current collector plate 20 and the second current collector plate 22 are arranged so as to sandwich the electrode group 2 in the width direction A. The first current collector plate 20 is disposed on the side of first joined region 46. The second current collector plate 22 is disposed on the side of the second joined region 48. The thickness of the first current collector plate 20 and the second current collector plate 22 is, by way of example, adjusted to fall within a range between 0.1 mm and 0.8 mm, both inclusive.

The first current collector plate 20 is made of, for example, aluminum or the like. The plurality of exposed portions 12a bent in the first joined region 46 are placed in surface contact with the first current collector plate 20. By bending each exposed portion 12a, the contact area between each exposed portion 12a and the first current collector plate 20 increases. Laser welding is performed at a position where the first joined region 46 and the first current collector plate 20 overlap. Thereby, the exposed portion 12a of each winding layer and the first current collector plate 20 are joined to each other.

The second current collector plate 22 is made of, for example, copper. The plurality of exposed portions 12a bent in the second joined region 48 are placed in surface contact with the second current collector plate 22. By bending each exposed portion 12a, the contact area between each exposed portion 12a and the second current collector plate 22 increases. Laser welding is performed at a position where the second joined region 48 and the second current collector plate 22 overlap. Thereby, the exposed portion 12a of each winding layer and the second current collector plate 22 are joined to each other.

The electrode group 2 to which the first current collector plate 20 and the second current collector plate 22 are joined is housed in the bottomed cylindrical outer can 4 along with the electrolytic solution. The outer can 4 is made of, for example, copper, nickel, iron, aluminum, an alloy thereof, or the like. The second current collector plate 22 is joined to the inner bottom surface of the outer can 4 by welding or the like. The first current collector plate 20 is joined to a sealing plate 26 made of the same metal as the outer can 4 by welding or the like. The sealing plate 26 is fitted into the opening of the outer can 4 via an insulating gasket 24. Thereby, the electrode group 2 and the electrolytic solution are sealed in the outer can 4.

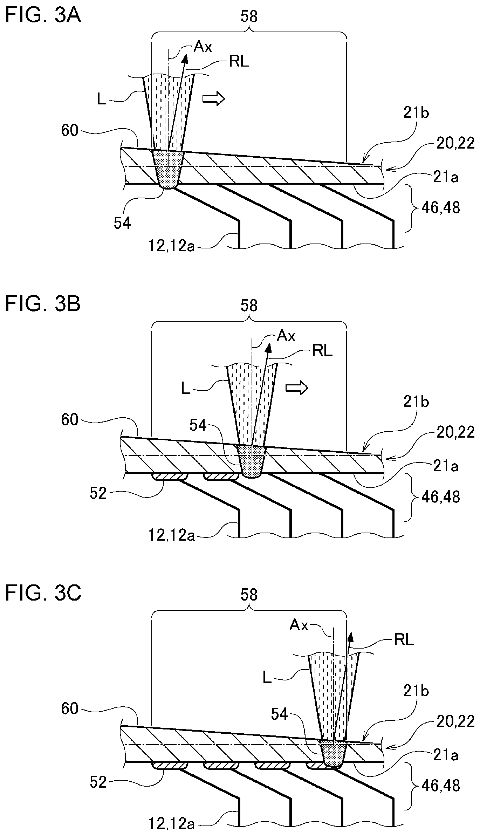

A description will now be given of a method of manufacturing the power storage apparatus 1 and a structure of the current collector plate. Figs. 3A-3C show the steps of joining the current collector 12 and the current collector plate. Fig. 3A-3C show only some of the exposed portions 12a. Further, only a part of the current collector plate is shown.

First, as shown in Fig. 2A, the first electrode plate 6, the second electrode plate 8, and the separators 10, which are belt-like, are prepared. Then, the separator 10, the first electrode plate 6, the separator 10, and the second electrode plate 8 are stacked in this order. The stacked product thus obtained is wound in a spiral shape to form the winding electrode group 2.

Then, the electrode group 2 is set in a processing machine (not shown). Further, the end of the current collector 12 provided in the first electrode plate 6 is bent by the processing machine in the radial direction B. This forms the first joined region 46 including the plurality of exposed portions 12a bent in the radial direction B. After that, the first current collector plate 20 is pressed against the first joined region 46. The plurality of exposed portions 12a arranged in the first joined region 46 and the first current collector plate 20 are joined to each other by laser welding.

Specifically, as shown in Fig. 3A, the plurality of exposed portions 12a arranged are brought into contact with the first surface 21a of the first current collector plate 20, and the second surface 21b of the first current collector plate 20 opposite the first surface 21a is irradiated with laser beam L in that state. The laser beam L irradiates one end of an irradiated region 58 on the second surface 21b. The irradiated region 58 overlaps the first joined region 46 in the width direction A. Thus, the irradiated region 58 extends in the direction of the arrangement of the exposed portions 12a and overlaps the plurality of exposed portions 12a arranged. In the embodiment, four irradiated regions 58 extend radially from the center of winding C (see Fig. 2B).

Irradiation of the irradiated region 58 with the laser beam L forms a melted portion 54 having a depth reaching the first surface 21a in the first current collector plate 20. In addition, the tip of the current collector 12 is also melted to form a part of the melted portion 54. The melted portion 54 is also called a melting pond. Then, as shown in Fig. 3B and Fig. 3C, the melted portion 54 moves from one end to the other in the irradiated region 58 according to the movement of the position irradiated with the laser beam. The melted portion 54 is substantially comprised only of the molten product of the first current collector plate 20 at the position where the current collector 12 is not present. The melted portion 54 is comprised of the molten product of the first current collector plate 20 and the molten product of the current collector 12 at the position where the current collector 12 is present. As the irradiated region 58 is scanned with the laser beam L from the one end to the other end, a joined portion 52 that joins each exposed portion 12a and the first surface 21a of the first current collector plate 20 is formed. The direction of scan with the laser beam L may be from the center of winding C toward outside of the electrode group 2 or from outside of the electrode group 2 toward the center of winding C.

When all irradiated regions 58 in the first current collector plate 20 are irradiated with the laser beam L, the first current collector plate 20 is completely joined to the electrode group 2. Subsequently, the end of the current collector 12 provided in the second electrode plate 8 is bent by a processing machine. This forms a second joined region 48 including the plurality of exposed portions 12a bent in the radial direction B. After that, the second current collector plate 22 is pressed against the second joined region 48. The plurality of exposed portions 12a arranged in the second joined region 48 and the second current collector plate 22 are joined to each other by laser welding.

The process of joining the exposed portion 12a and the second current collector plate 22 is similar to the process of joining the exposed portion 12a and the first current collector plate 20. Specifically, as shown in Fig. 3A, the plurality of exposed portions 12a arranged are brought into contact with the first surface 21a of the second current collector plate 22, and the second surface 21b of the second current collector plate 22 is irradiated with the laser beam L in that state. The laser beam L irradiates one end of the irradiated region 58 on the second surface 21b. Four irradiated regions 58 in the second current collector plate 22 also extend radially from the center of winding C.

Irradiation with the laser beam L forms a melted portion 54 having a depth reaching the first surface 21a in the second current collector plate 22. In addition, the tip of the current collector 12 is also melted to form a part of the melted portion 54. As the irradiated region 58 is scanned with the laser beam L from the one end to the other end as shown in Fig. 3B and Fig. 3C, the joined portion 52 that joins each exposed portion 12a and the first surface 21a of the second current collector plate 22 is formed.

The electrode group 2 to which the first current collector plate 20 and the second current collector plate 22 are joined is housed in the outer can 4 along with the electrolytic solution. Further, processes like the joint of the second current collector plate 22 to the outer can 4, joint of the first current collector plate 20 to the sealing plate 26, fitting of the sealing plate 26 in the opening of the outer can 4, etc. are performed. Thereby, the power storage apparatus 1 is obtained. The sequence of steps such as the joint of respective parts, housing in the outer can 4, and fitting of the sealing plate 26 can be modified as appropriate. In the case a liquid pouring port is provided in the sealing plate 26, etc., for example, the electrolytic solution may be poured into the outer can 4 after the sealing plate 26 is fitted in the opening of the outer can 4. Alternatively, the first joined region 46 and the second joined region 48 may be formed first, the first current collector plate 20 and the second current collector plate 22 may then be pressed against the electrode group 2, and then the first current collector plate 20 and the second current collector plate 22 may be irradiated with the laser beam L.

The first current collector plate 20 has an inclined surface 60 extending diagonally with respect to the optical axis Ax of the laser beam L at least in a part of the irradiated region 58. The first current collector plate 20 of the embodiment presents the inclined surface 60 over the entire irradiated region 58. Further, the attitude of the first current collector plate 20 is generally determined so that the first surface 21a is perpendicular to the center of winding C in order to join the plurality of exposed portions 12a to the first surface 21a securely. Further, the irradiation angle of the laser beam L is generally determined so that the optical axis Ax is parallel to the center of winding C, i.e., the optical axis Ax is perpendicular to the first surface 21a. Therefore, the inclined surface 60, which is inclined with respect to the optical axis Ax, is also inclined with respect to the center of winding C and the first surface 21a.

Most of the reflected light RL reflected by the inclined surface 60 travels diagonally with respect to the optical axis Ax. This can prevent the reflected light RL from becoming the light returning to the laser apparatus more successfully as compared to the case where the irradiated region 58 does not have the inclined surface 60 and extends perpendicularly to the optical axis Ax. Thus, the return light can be reduced.

The inclination angle of the inclined surface 60 with respect to the first surface 21a, i.e., the inclination angle of the normal of the inclined surface 60 with respect to the optical axis Ax, can be appropriately set based on the designer's empirical knowledge or the designer's experiment or simulation according to the output of the laser beam L, the scanning speed of the laser beam L, the dimension of the irradiated region 58, etc. The inclination angle is, for example, between 1° and 5°, both inclusive.

By setting the inclination angle to be 1° or more, it is easier to reduce the return light. Further, the inclination angle of 5° or less makes it easier to prevent an excessive increase in the thickness of the first current collector plate 20 at the upper end of the inclined surface 60 more successfully. A smaller variation in the thickness of the first current collector plate 20 results in a smaller change in the output of the laser beam L or a smaller change in the scanning speed required to maintain a constant heat input to each position in the irradiated region 58. This suppresses a disturbance in the melted portion 54 caused by a change in the output of the laser beam L or a change in the scanning speed and resultant adverse effects such as spattering and holes in the current collector plate caused by penetration of the laser beam L through the current collector plate. Further, it is possible to make it easier to uniformize the strength of joint between the exposed portion 12a and the first surface 21a at each position in the irradiated region 58.

As described above, the first current collector plate 20 by way of one example is made of aluminum. Aluminum tends to be highly reflective of the laser beam L. For this reason, the return light can be reduced more effectively by providing the inclined surface 60 in the irradiated regions 58 in the case the first current collector plate 20 is made of aluminum.

Like the first current collector plate 20, the second current collector plate 22 also has the inclined surface 60 extending diagonally with respect to the optical axis Ax of the laser beam L at least in a part of the irradiated region 58. The second current collector plate 22 of the embodiment has the inclined surface 60 over the entirety of the irradiated region 58. Further, the inclined surface 60 is also inclined with respect to the center of winding C and the first surface 21a. Providing the inclined surface 60 in the irradiated region 58 reduces the light returning to the laser apparatus. The inclination angle of the inclined surface 60 with respect to the first surface 21a is, for example, between 1° and 5°, both inclusive. This makes it easier to reduce the return light. It also suppresses harmful effects such as spattering and holes in the current collector plate. It also makes it easier to uniformize the strength of joint between the exposed portion 12a and the first surface 21a at each position in the irradiated region 58.

As described above, the second current collector plate 22 by way of one example can be made of copper. Copper tends to be highly reflective of the laser beam L. For this reason, the return light can be reduced more effectively by providing the inclined surface 60 in the irradiated regions 58 in the case the second current collector plate 22 is made of copper.

The first current collector plate 20 and the second current collector plate 22 of the power storage apparatus 1 obtained by the above manufacturing method have a region in the second surface 21b irradiated with the laser beam L, that is, a molten mark, and at least part of the region has the inclined surface 60 extending diagonally with respect to the optical axis Ax of the laser beam L or the center of winding C.

More reflected light RL tends to be produced when each collector plate is irradiated with the laser beam L before the second surface 21b is melted than after the melting. Thus, one conceivable method to reduce the return light would be to increase the heat input per unit time to the current collector plate by increasing the output of the laser beam L, etc., and to melt the second surface 21b more quickly. If the amount of heat input per unit time is increased, however, it becomes difficult to maintain the state of the melted portion 54 stably. This can easily cause harmful effects such as spattering and holes in the current collector plate. In particular, aluminum and copper have relatively low melting points. If the current collector plate is made of aluminum or copper, therefore, the above-mentioned harmful effects occur more easily.

Meanwhile, it is possible to reduce the light returning to the laser apparatus while suppressing the above-mentioned harmful effects by providing the inclined surface of 60 in the irradiated region 58 as in the embodiment. Accordingly, the damage to the laser apparatus can be suppressed while maintaining the quality of the power storage apparatus 1. Also, as described above, the attitude of the electrode group 2 and the laser beam L is generally determined so that the center of winding C and the optical axis Ax are parallel. In the case of a method of inclining the irradiated region 58 by inclining the entire electrode group 2 with respect to the optical axis As, therefore, the existing processing machine cannot be used as it is. In the case of providing the inclined surface 60 in the irradiated region 58, on the other hand, the existing processing machine can be used as it is. Therefore, it is possible to reduce the return light while suppressing an increase in the manufacturing cost of the power storage apparatus 1.

The embodiment of the present disclosure has been described above in detail. The embodiment described above is merely a specific example of practicing the present disclosure. The details of the embodiments shall not be construed as limiting the technical scope of the present disclosure. A number of design modifications such as modification, addition, deletion, etc. of constituting elements may be made to the extent that they do not depart from the idea of the invention defined by the claims. New embodiments with design modifications will provide the combined advantages of the embodiment and the variation. Although the details subject to such design modification are emphasized in the embodiment by using phrases such as "of the embodiment" and "in the embodiment", details not referred to as such are also subject to design modification. Any combination of constituting elements included in the respective embodiments is also useful as an embodiment of the present disclosure. Hatching in the cross section in the drawings should not be construed as limiting the material of the hatched object.

### (Variation)

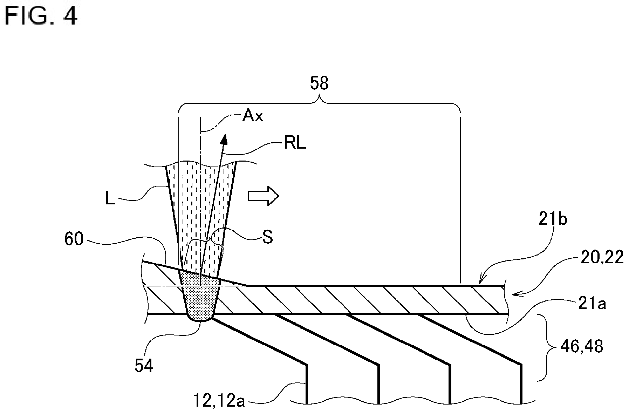

Fig. 4 is a cross-sectional view of the current collector plate according to the variation. In the first current collector plate 20 and the second current collector plate 22 of the embodiment, the inclined surface 60 is provided over the entire irradiated region 58. In the first current collector plate 20 and the second current collector plate 22 of the variation, on the other hand, the inclined surface 60 is provided only in a part of the irradiated region 58 in the direction of arrangement of the exposed portions 12a. By shortening the inclined surface 60 in this way, the variation in the thickness of the current collector plate is decreased. Therefore, it is possible to suppress adverse effects such as spattering and holes in the current collector plate more successfully. Further, it is possible to make it easier to uniformize the strength of joint between the exposed portion 12a and the first surface 21a at each position in the irradiated region 58.

In further accordance with the variation, the inclined surface 60 is provided at a position in each irradiated region 58 where irradiation with the laser beam L is started. As mentioned above, more reflected light RL tends to be produced before the second surface 21b is melted. For this reason, the reflected light RL is most likely to be produced where irradiation with the laser beam L is started. Therefore, the return light can be reduced more efficiently by providing the inclined surface 60 where irradiation with the laser beam L is started. Preferably, the inclined surface 60 is sized to be equal to or larger than the spot diameter S of the laser beam L. This can reduce the return light more reliably. Further, the size of the inclined surface 60 is not more than twice, not more than 1.5 times, or practically equal to the spot size S.

The embodiments may be defined by the following items.

### [Item 1]

A method of manufacturing a power storage apparatus (1), including:
preparing an electrode group (2) including a current collector (12) in which an electrode active material layer (14) is stacked on a part of the current collector (12); and
bringing an exposed portion (12a) of the current collector (12) that is not coated with the electrode active material layer (14) into contact with a first surface (21a) of the current collector plate (20, 22) and irradiating a second surface (21b) of the current collector plate (20, 22) opposite to the first surface (21a) with a laser beam (L) to join the exposed portion (12a) to the first surface (21a),
wherein the current collector plate (20, 22) has an inclined surface (60) extending diagonally with respect to an optical axis (Ax) of the laser beam (L) at least in a part of a region (58) in the second surface (21b) irradiated with the laser beam (L).

### [Item 2]

The method of manufacturing a power storage apparatus (1) according to Item 1,
wherein the electrode group (2) has a structure in which a plurality of exposed portions (12a) are arranged,
wherein the irradiated region (58) extends in a direction of arrangement of the exposed portions (12a), and
wherein the inclined surface (60) is provided only in a part of the irradiated region (58) in the direction of arrangement.

### [Item 3]

The method of manufacturing a power storage apparatus (1) according to Item 2,
wherein the inclined surface (60) is provided at a position in the irradiated region (58) where irradiation with the laser beam (L) is started.

### [Item 4]

The method of manufacturing a power storage apparatus according to Item 3,
wherein the inclined surface (60) is sized to be equal to or larger than a spot diameter (S) of the laser beam (L).

### [Item 5]

The method of manufacturing a power storage apparatus according to any one of Items 1 through 4,
wherein the current collector plate (20, 22) is made of aluminum or copper.

### [Item 6]

A power storage apparatus (1) including:
an electrode group (2) including a current collector (12) in which an electrode active material layer (14) is stacked on a part of the current collector (12); and
a current collector plate (20, 22) having a first surface (21a) to which is joined an exposed portion (12a) of the current collector (12) not coated with the active electrode material layer (14),
wherein the current collector plate (20, 22) has a region (58) irradiated with a laser beam (L) on a second surface (21b) opposite to the first surface (21a) and has an inclined surface (60) extending diagonally with respect to an optical axis (Ax) of the laser beam (L) at least in a part of the region (58).

### INDUSTRIAL APPLICABILITY

The present disclosure is applicable to a method of manufacturing a power storage apparatus and to a power storage apparatus.

### REFERENCE SIGNS LIST

1 power storage apparatus, 2 electrode group, 12 current collector, 12a exposed portion, 14 electrode active material layer, 20 first current collector plate, 21a first surface, 21b second surface, 22 second current collector plate, 58 irradiated region, 60 inclined surface, Ax optical axis, L laser beam, S spot diameter

## Claims

1. A method of manufacturing a power storage apparatus, comprising:
preparing an electrode group including a current collector in which an electrode active material layer is stacked on a part of the current collector; and
bringing an exposed portion of the current collector that is not coated with the electrode active material layer into contact with a first surface of the current collector plate and irradiating a second surface of the current collector plate opposite to the first surface with a laser beam to join the exposed portion to the first surface,
wherein the current collector plate has an inclined surface extending diagonally with respect to an optical axis of the laser beam at least in a part of a region in the second surface irradiated with the laser beam.

2. The method of manufacturing a power storage apparatus according to claim 1,
wherein the electrode group has a structure in which a plurality of exposed portions are arranged,
wherein the irradiated region extends in a direction of arrangement of the exposed portions, and
wherein the inclined surface is provided only in a part of the irradiated region in the direction of arrangement.

3. The method of manufacturing a power storage apparatus according to claim 2,
wherein the inclined surface is provided at a position in the irradiated region where irradiation with the laser beam is started.

4. The method of manufacturing a power storage apparatus according to claim 3,
wherein the inclined surface is sized to be equal to or larger than a spot diameter of the laser beam.

5. The method of manufacturing a power storage apparatus according to any one of claims 1 through 4,
wherein the current collector plate is made of aluminum or copper.

6. A power storage apparatus comprising:
an electrode group including a current collector in which an electrode active material layer is stacked on a part of the current collector; and
a current collector plate having a first surface to which is joined an exposed portion of the current collector not coated with the active electrode material layer,
wherein the current collector plate has a region irradiated with a laser beam on a second surface opposite to the first surface and has an inclined surface extending diagonally with respect to an optical axis of the laser beam at least in a part of the region.
